Europäisches Patentamt

European Patent Office

Office européen des brevets

(11) Veröffentlichungsnummer: **0 479 025 A2**

# EUROPÄISCHE PATENTANMELDUNG

(21) Anmeldenummer: **91115672.7**

(22) Anmeldetag: **16.09.91**

(51) Int. Cl.5: **B23B 5/44**

(30) Priorität: **02.10.90 DE 4031091**

(43) Veröffentlichungstag der Anmeldung:
**08.04.92 Patentblatt 92/15**

(84) Benannte Vertragsstaaten:
**DE FR GB IT**

(71) Anmelder: **Ex-Cell-O GmbH**
**Salacher Strasse 93**
**W-7332 Eislingen/Fils(DE)**

(72) Erfinder: **Fritz, Hermann, Dr.**
**Mörikestrasse 4**
**W-7075 Mutlangen(DE)**

Erfinder: **Staiger, Hans**
**Oechslinstrasse 32**
**W-7320 Göppingen(DE)**
Erfinder: **Straub, Hans**
**Nuberstrasse 31**
**W-7347 Bad Überkingen(DE)**
Erfinder: **Winckler, Friedrich**
**Freiligrathstrasse 12**
**W-7070 Schwäbisch Gmünd 14(DE)**

(74) Vertreter: **Hoeger, Stellrecht & Partner**
**Uhlandstrasse 14 c**
**W-7000 Stuttgart 1(DE)**

(54) **Vorrichtung zum Unrundbearbeiten von Werkstücken.**

(57) Um eine Vorrichtung zum Unrundbearbeiten von Werkstücken, umfassend ein Maschinengestell, eine am Maschinengestell gehaltene und als C-Achse betriebene Werkstückspindel für ein zu bearbeitendes Werkstück, einen auf dem Maschinengestell in Z-Richtung zur Werkstückspindel verschiebbaren Z-Schlitten mit einem Z-Achsen-Antrieb, einen auf dem Z-Schlitten angeordneten und als Linearmotor ausgebildeten X-Achsen-Antrieb, mit welchem ein Werkzeug in X-Richtung auf das Werkstück zustellbar ist, und eine numerische Steuerung zur Ansteuerung des X-Achsen-Antriebs in Korrelation zur Drehung der Werkstückspindel, derart zu verbessern, um ein präziseres Arbeitsergebnis zu erreichen, wird vorgeschlagen, daß der als X-Achsen-Antrieb dienende Linearmotor ein Drehstrom-Asynchron-Linearmotor mit einem in X-Richtung fest auf dem Z-Schlitten angeordneten Primärteil und einem relativ zu diesem beweglichen Sekundärteil ist.

Fig. 1

EP 0 479 025 A2

Die Erfindung betrifft eine Vorrichtung zum Unrundbearbeiten von Werkstücken, umfassend ein Maschinengestell, eine am Maschinengestell gehaltene und als C-Achse betriebene Werkstückspindel für ein zu bearbeitendes Werkstück, einen auf dem Maschinengestell in Z-Richtung zur Werkstückspindel verschiebbaren Z-Schlitten mit einem Z-Achsenantrieb, einen auf dem Z-Schlitten angeordneten und als Linearmotor ausgebildeten X-Achsenantrieb, mit welchem ein Werkzeug in X-Richtung auf das Werkstück zustellbar ist, und eine numerische Steuerung zum Ansteuern des X-Achsenantriebs in Korrelation zur Drehung der Werkstückspindel.

Eine derartige Vorrichtung zum Unrundbearbeiten von Werkstücken ist aus der EP-A-0 201 230 bekannt.

Bei dieser Vorrichtung findet ein X-Achsen-Antrieb Verwendung, welcher mit einem Tauchspulenlinearmotor arbeitet und welcher hinsichtlich der erreichbaren Stellkraft und Führungspräzision nicht die sehr hohen Anforderungen an die Genauigkeit beim Unrundbearbeiten von Werkstücken, insbesondere Kolben, erfüllt, da diese Kolben sowohl in X- als auch in Z-Richtung Abweichungen von einem idealen Zylinder aufweisen, die möglichst genau gearbeitet sein sollten.

Der Erfindung liegt daher die Aufgabe zugrunde, eine Vorrichtung der gattungsgemäßen Art hinsichtlich ihrer Führungsgenauigkeit und Stellkraft zu verbessern, um ein präziseres Arbeitsergebnis zu erreichen.

Diese Aufgabe wird bei einer Vorrichtung der eingangs beschriebenen Art erfindungsgemäß dadurch gelöst, daß der als X-Achsen-Antrieb dienende Linearmotor ein Drehstrom-Asynchron-Linearmotor mit einem in X-Richtung fest auf dem Z-Schlitten angeordneten Primärteil und einem relativ zu diesem beweglichen Sekundärteil ist.

Durch die Verwendung eines Drehstrom-Asynchron-Linearmotors mit einem beweglichen Sekundärteil und einem feststehenden Primärteil wird zum einen das Problem der Stromversorgung des beweglichen Teils gelöst und zum anderen durch die Verwendung eines neuartigen Motorenprinzips eine wesentlich höhere Stellkraft und somit eine wesentlich präzisere Führung des Werkzeugs erreicht.

Ein weiterer Vorteil bei der Verwendung eines Drehstrom-Asynchron-Linearmotors ist darin zu sehen, daß bei diesem das Sekundärteil über große Strecken mit genauer Positionierung in X-Richtung verschiebbar ist, so daß der gesamte erforderliche Hub in X-Richtung durch den Linearmotor erreichbar ist und sich so eine zusätzliche, numerisch gesteuerte X-Achse erübrigt, auf welcher der für die schnelle Unrundbearbeitung erforderliche X-Achsen-Antrieb sitzt. Damit eröffnet die Verwendung eines Drehstrom-Asynchron-Linearmotors die Möglichkeit, lediglich mit diesem sämtliche Verstellbewegungen in Richtung der X-Achse alleine ohne zusätzliche noch numerisch gesteuerte X-Achse durchzuführen.

Im einfachsten Fall kann der Linearmotor ein Primärteil aufweisen. Dies hat jedoch den Nachteil, daß quer zur X-Richtung asymmetrische Kräfte auf das Sekundärteil wirken. Aus diesem Grund ist es besonders vorteilhaft, wenn der Linearmotor ein Doppelkamm-Linearmotor mit zwei gegenüberliegenden Primärteilen ist, die das Sekundärteil zwischen sich einschließen, so daß sich die quer zur X-Richtung wirkenden Kräfte auf das Sekundärteil im wesentlichen aufheben.

Besonders günstige räumliche Verhältnisse lassen sich bei einem erfindungsgemäßen Linearmotor dann erreichen, wenn das Primärteil das Sekundärteil in X-Richtung überragt.

Darüberhinaus lassen sich die räumlichen Verhältnisse ferner noch dadurch verbessern, daß das Primärteil das Sekundärteil in Richtung quer zur X-Richtung überragt.

Eine besonders hohe Präzision bei der Verstellbewegung ist bei dem erfindungsgemäßen Linearmotor dann erreichbar, wenn das Sekundärteil beiderseits desselben mit in X-Richtung im Abstand voneinander angeordneten Lagern geführt ist.

Vorzugsweise sind die Lager, um einen möglichst kompakten Aufbau des X-Achsen-Antriebs zu erreichen, beiderseits des Primärteils angeordnet.

Konstruktiv besonders vorteilhaft ist es dabei, wenn das Sekundärteil zwischen den beiderseits des Primärteils angeordneten Lagern freitragend verläuft, da sich auch in diesem Fall die Flußführung durch das Sekundärteil besonders einfach gestalten läßt und keine störenden Einflüsse der Lager zur Führung des Sekundärteils zwischen den Primärteilen auftreten.

Um den Werkzeugträger möglichst leicht auszubilden und möglichst hohe Beschleunigungen aussetzen zu können, ist es vorteilhaft, wenn das Sekundärteil einen tragenden Abschnitt des Werkzeugträgers bildet und somit zu dessen Steifigkeit beiträgt.

Besonders vorteilhaft ist es dabei, wenn ein Längsabschnitt des Werkzeugträgers ausschließlich von dem Sekundärteil gebildet wird und somit keine zusätzlichen versteifenden Elemente erforderlich sind, die andererseits wieder den Werkzeugträger und somit das bewegliche Teil schwerer machen.

Insbesondere dann, wenn das Sekundärteil einen tragenden Abschnitt des Werkzeugträgers bildet, ist es vorteilhaft, wenn das Sekundärteil auf konstanter Temperatur gehalten wird, so daß Temperaturunterschiede im Sekundärteil nicht zu einer Deformation des Werkzeugträgers führen und somit die Präzision des X-Achsen-Antriebs negativ beeinflußt wird.

Im einfachsten Fall läßt sich eine konstante Temperatur des Sekundärteils dann erreichen, wenn dieses durch Ölumspülung auf konstanter Temperatur gehalten ist.

Eine besonders hohe Präzision bei besonders kompakter Bauweise des X-Achsen-Antriebs ist dann erreichbar, wenn die Lager für das Sekundärteil gleichzeitig die Lager für den Werkzeugträger sind und diesen ausschließlich in X-Richtung führen. Dadurch dienen die Lager sowohl der Führung des Werkzeugträgers als auch des Sekundärteils, so daß eine Überbestimmung der Führung des Werkzeugträgers ausgeschlossen ist.

Die Lager können bei einem Ausführungsbeispiel Wälzlager sein, welche zweckmäßigerweise mechanisch vorgespannt sind.

Besonders vorteilhaft ist es jedoch, wenn die Lager hydrostatische Gleitlager sind.

Diese hydrostatischen Gleitlager sind vorzugsweise so ausgebildet, daß sie in X-Richtung stationär auf dem Z-Schlitten angeordnete Führungen und in diesen verschiebliche, mit dem Sekundärteil verbundene Gleitstücke umfassen.

Um den Werkzeugträger selbst möglichst leicht auszuführen, ist dabei vorteilhafterweise vorgesehen, daß Längsabschnitte des Werkzeugträgers ausschließlich von den Gleitstücken gebildet sind, so daß diese Gleitstücke selbst tragende Längsabschnitte des Werkzeugträgers bilden.

Vorzugsweise sind die hydrostatischen Lager so ausgeführt, daß sie Öltaschen aufweisen, welche mit unter Druck stehendem Öl beaufschlagt sind. Eine besonders vorteilhafte präzise Führung der Gleitstücke durch die Öltaschen ist dann möglich, wenn eine Ölzuführeinrichtung vorgesehen ist, welche den Öldruck in den Öltaschen so steuert, daß bei steigendem Öldruck auch die Öldurchflußmenge durch die Taschen steigt. Bei dieser Ölzuführeinrichtung wird also in dem Moment, in dem das Gleitstück durch Ausweichen in eine Richtung den Druck in eine der Öltaschen erhöht, dieser Ausweichbewegung dadurch entgegengewirkt, daß zusätzlich auch noch die Öldurchflußmenge in der jeweiligen Tasche steigt und somit noch eine zusätzliche Kraft auf das Gleitstück wirkt, um dieses wieder zentriert in seine ursprüngliche Stellung zu bringen.

Hydrostatische Gleitlager mit einer derartigen Ölzufuhr führen somit in Richtung quer zur X-Richtung mit der aufgabengemäß geforderten außerordentlich hohen Präzision.

Besonders vorteilhaft ist ein Ausführungsbeispiel, bei welchem das für die hydrostatischen Gleitlager verwendete Öl gleichzeitig zur Temperierung des Sekundärteils dient.

Darüberhinaus ist bei einem vorteilhaften Ausführungsbeispiel vorgesehen, daß mindestens ein Lager des Sekundärteils eine Drehmomentabstützung aufweist.

Besonders vorteilhaft ist es dabei, wenn die Drehmomentabstützung hydrostatisch gelagerte Führungsflächen aufweist. Zweckmäßigerweise sind dabei die Führungsflächen hydrostatisch abgestützte Keilflächen.

Eine günstige Anordnung des Werkzeugs in bezug auf das Sekundärteil sieht vor, daß das Werkzeug auf der dem Sekundärteil gegenüberliegenden Seite des vorderen Lagers angeordnet ist.

Bei dieser Anordnung hat es sich ferner als besonders günstig erwiesen, wenn das zwischen dem Sekundärteil und dem Werkzeug liegende Lager mit der Drehmomentabstützung versehen ist.

Um das Werkzeug in einfacher Weise wechseln zu können, ist vorteilhafterweise vorgesehen, daß das Werkzeug in einem auswechselbaren Werkzeughalter sitzt.

Damit dieser Werkzeughalter exakt positioniert werden kann, ist darüberhinaus vorgesehen, daß der Werkzeugträger zur exakten Positionierung des Werkzeughalters eine Maßanschlagfläche aufweist, gegen welche der Werkzeughalter anlegbar ist.

Ergänzend oder alternativ zu der vorstehend beschriebenen Lösung der Aufgabe wird die eingangs genannte Aufgabe auch erfindungsgemäß dadurch gelöst, daß ein X-Achsen-Sensor vorgesehen ist, welcher einen an einem werkzeugseitigen Endbereich des Werkzeugträgers angeordneten Maßangriffspunkt aufweist.

Durch diese Anordnung des Maßangriffspunktes an dem werkzeugseitigen Endbereich des Werkzeugträgers werden alle Ungenauigkeiten von vornherein eliminiert, die durch thermische oder belastungsinitiierte Ausdehnungen des Werkzeugträgers in seinem hinter diesem Maßangriffspunkt liegenden Bereich auftreten, da die Steuerung den exakten Antrieb stets so steuert, daß der Maßangriffspunkt genau die gewünschte X-Achsen-Lage einnimmt.

Insbesondere bei einem Ausführungsbeispiel, bei welchem ein Werkzeughalter Verwendung findet, ist es vorteilhaft, wenn der Maßangriffspunkt des X-Achsen-Sensors in unmittelbarer Umgebung der Maßanschlagfläche an dem Werkzeugträger liegt, da somit in einfacher Weise der Werkzeughalter ausgewechselt werden kann, ohne jeweils den Maßangriffspunkt neu fixieren zu müssen.

Wenn jedoch eine besonders hohe Genauigkeit verlangt wird, ist es erforderlich, wenn der Maßangriffspunkt des X-Achsen-Sensors an dem Werkzeughalter liegt.

Der X-Achsen-Sensor selbst kann in beliebiger Weise ausgebildet sein. Als besonders vorteilhaft hat es sich erwiesen, wenn der X-Achsen-Sensor einen linearen Inkrementalgeber aufweist, welcher vorzugsweise einen optisch ablesbaren Maßstab umfaßt.

Alternativ dazu hat es sich aber auch als vorteilhaft erwiesen, wenn der X-Achsen-Sensor ein Laserinterferrometer umfaßt, mit welchem besonders empfindliche Längenmessungen in X-Richtung möglich sind.

Ein derartiges Laserinterferrometer weist vorzugsweise einen den Laserstrahl aussendenden Meßkopf und einen Reflektor auf, welcher den Laserstrahl zu dem Meßkopf zurückreflektiert. Um eine besonders genaue Messung mit dem Laserinterferrometer durchführen zu können, ist vorteilhafterweise vorgesehen, daß das Laserinterferrometer einen temperaturstabil mit dem Maßangriffspunkt gekoppelten Reflektor umfaßt.

Im einfachsten Fall ist dabei vorgesehen, daß der Reflektor am Maßangriffspunkt angeordnet ist.

Um in besonders einfacher Weise eine Messung der Position des Reflektors von dem entfernt von diesem angeordneten Meßkopf durchführen zu können, ist vorzugsweise vorgesehen, daß ein Laserstrahl des Laserinterferrometers durch einen Kanal geführt ist. Dadurch wird die Möglichkeit geschaffen, den Maßreflektor am Maßangriffspunkt anzuordnen, das heißt in einem Bereich nahe des Werkzeugs, in welchem eine erhebliche Schmutzentwicklung durch Späne und Öl auftritt, ohne dadurch jedoch die Qualität der Messung durch den Schmutz zu beeinträchtigen, da der Kanal den zum Reflektor führenden Laserstrahl schützt.

Alternativ oder ergänzend dazu sieht ein weiteres zweckmäßiges Ausführungsbeispiel vor, daß der Laserstrahl des Laserinterferrometers von einem Lichtleiter zum Reflektor geführt ist, wobei insbesondere der Lichtleiter unmittelbar am Reflektor endet oder selbst mit einem reflektierenden Ende versehen und mit diesem mit dem Maßangriffspunkt verbunden ist.

Der Kanal kann als separater Kanal zum Maßangriffspunkt geführt werden. Besonders vorteilhaft ist es jedoch, wenn der Kanal im Werkzeugträger verläuft.

Da der Maßangriffspunkt vorteilhafterweise am werkzeugseitigen Ende liegt, aus geometrischen Gründen und Gründen der Meßsicherheit es jedoch erforderlich ist, den Meßkopf an dem dem Werkzeug gegenüberliegenden Ende des Werkzeugträgers anzuordnen, ist vorzugsweise vorgesehen, daß der Kanal von einer dem Werkzeug gegenüberliegenden Rückseite des Werkzeugträgers in Längsrichtung derselben bis zu dem Maßangriffspunkt geführt ist.

Eine Alternative zur Führung des Laserstrahls über einen Kanal zu dem Reflektor ist darin zu sehen, daß der Reflektor über ein eine Temperaturinvariante aufweisendes Zwischenelement mit dem Maßangriffspunkt verbunden ist. Dieses Zwischenelement mit temperaturinvarianter Abmessung ermöglicht es, eine Verbindung zwischen dem Maßangriffspunkt, welcher im Bereich der starken Schmutzentwicklung angeordnet ist und dem Reflektor zu schaffen, wobei der Reflektor außerhalb des Bereichs starker Schmutzentwick- lung angeordnet ist, um eine einwandfreie Lagemessung des Reflektors durchführen zu können.

Das Zwischenelement kann auf die unterschiedlichste Art und Weise angeordnet sein. Da jedoch der Maßangriffspunkt an dem Werkzeugträger liegt, ist vorzugsweise das Zwischenelemennt ebenfalls an dem Werkzeugträger angeordnet.

Noch vorteilhafter ist jedoch, wenn das Zwischenelement durch den Werkzeugträger hindurchgeführt ist.

Insbesondere zweckmäßig ist eine Ausführung, bei welcher das Zwischenelement von einem dem Werkzeug gegenüberliegenden rückwärtigen Ende des Werkzeugträgers in Längsrichtung durch diesen hindurch bis zum Maßangriffspunkt geführt ist.

Alle Ausführungsbeispiele der Vorrichtung mit einem erfindungsgemäß ausgebildeten X-Achsen-Sensor können zusätzlich auch noch Merkmale des erfindungsgemäßen X-Achsen-Antriebs, die im vorstehenden ausführlich beschrieben sind, aufweisen, da beide Lösungen dazu beitragen, die Posititionsgenauigkeit und Präzision der Führung des Werkzeugs beim Unrundbearbeiten zu verbessern.

Bei einer vorteilhaften Weiterbildung des erfindungsgemäßen Drehstrom-Asynchron-Linearmotors ist vorzugsweise vorgesehen, daß das Sekundärteil einen Eisenkern mit eingelegten Kurzschlußwicklungen aufweist.

Zweckmäßigerweise ist dabei das Sekundärteil so ausgebildet, daß es zwei in den Primärteilen zugewandten Ebenen liegende Kurzschlußwicklungen aufweist.

Um eine Möglichkeit zu schaffen, einen Kanal für den X-Achsen-Sensor durch das Sekundärteil hindurchzuführen, ist vorzugsweise vorgesehen, daß zwischen den Ebenen ein Kanal für den X-Achsen-Sensor hindurchläuft.

Die Steuerung des erfindungsgemäßen Drehstrom-Asynchron-Linearmotors erfolgt vorzugsweise durch eine Lageregelung desselben mittels einer flußorientierten Stromführung.

Günstigerweise ist dabei der Drehstrom-Asynchron-Linearmotor durch einen Rechner gesteuert, welcher Drehstrom-Sollwerte für den Linearmotor errechnet und an einen Umrichter gibt, der Drehstrom aus dem Netz entsprechend den Drehstrom-Sollwerten umrichtet.

Eine besonders vorteilhafte Variante der erfindungsgemäßen Vorrichtung sieht mehrere in einer zur X- und Z-Richtung senkrechten Richtung im Abstand voneinander angeordnete Werkzeuge vor.

Um diese Werkzeuge jeweils in einer definierten Position in Einsatz bringen zu können, ist dabei vorgesehen, daß der Linearmotor relativ zum Z-Schlitten in einer senkrecht zur Z-Richtung und X-Richtung verlaufenden Werkzeugstellrichtung verschiebbar ist.

Im einfachsten Fall beim Einsatz von zwei Werkzeugen ist vorgesehen, daß der Linearmotor zwischen zwei Anschlagstellungen verschiebbar ist.

Dabei sind die Anschlagstellungen zweckmäßigerweise so positioniert, daß in jeder Anschlagstellung eines der Werkzeuge des Werkzeugträgers in derselben Schnittebene steht, so daß jeweils das zum Einsatz kommende Werkzeug in ein und derselben Schnittebene steht und sich somit die Bedingungen für die Ansteuerung des Werkzeugträgers bei einem Wechsel des Werkzeugs nicht ändern.

Vorzugsweise ist dabei vorgesehen, daß eines der Werkzeuge zur Vorbearbeitung und ein anderes Werkzeug zur Fertigbearbeitung dient.

Darüberhinaus ist es bei einer weiteren verbesserten Ausführungsform der erfindungsgemäßen Vorrichtung von Vorteil, wenn ein weiterer Y'-Schlitten vorhanden ist, der einen Y'-Achsen-Antrieb trägt, mit welchem ein Werkzeugträger mit einem Werkzeug in Y'-Richtung auf das Werkstück zustellbar ist.

Günstigerweise ist dabei das in Y'-Richtung auf das Werkstück zustellbare Werkzeug zur Einarbeitung von Ringnuten, vorzugsweise Ringnuten für Kolbenringe, in das Werkstück vorgesehen.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:

Fig. 1    eine Seitenansicht eines ersten Ausführungsbeispiels;

Fig. 2    eine Draufsicht längs Linie 2-2 des ersten Ausführungsbeispiels;

Fig. 3    einen Schnitt durch das erste Ausführungsbeispiel längs Linie 3-3 in Fig. 2;

Fig. 4    einen horizontalen Schnitt durch einen X-Achsen-Antrieb des ersten Ausführungsbeispiels;

Fig. 5    einen vertikalen Schnitt durch den X-Achsen-Antrieb;

Fig. 6    einen Schnitt längs Linie 6-6 in Fig. 5;

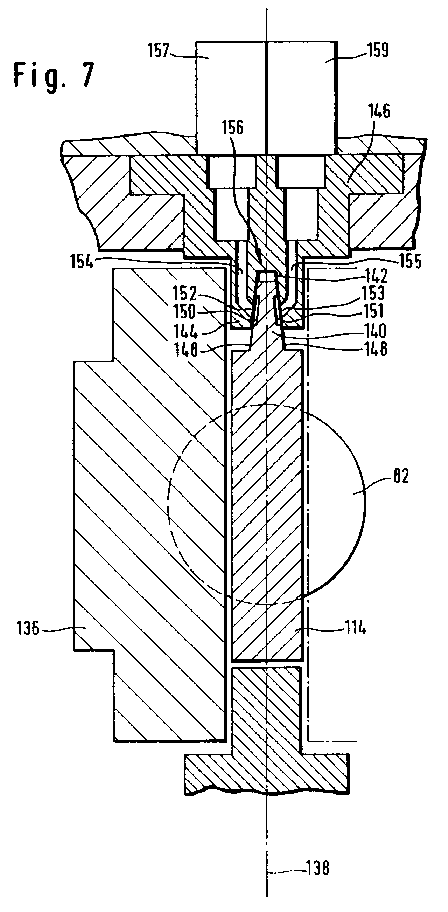

Fig. 7    einen Schnitt längs Linie 7-7 in Fig. 5;

Fig. 8    eine schematische Darstellung einer Steuereinrichtung des ersten Ausführungsbeispiels;

Fig. 9    einen Schnitt ähnlich Fig. 5 durch ein zweites Ausführungsbeispiel;

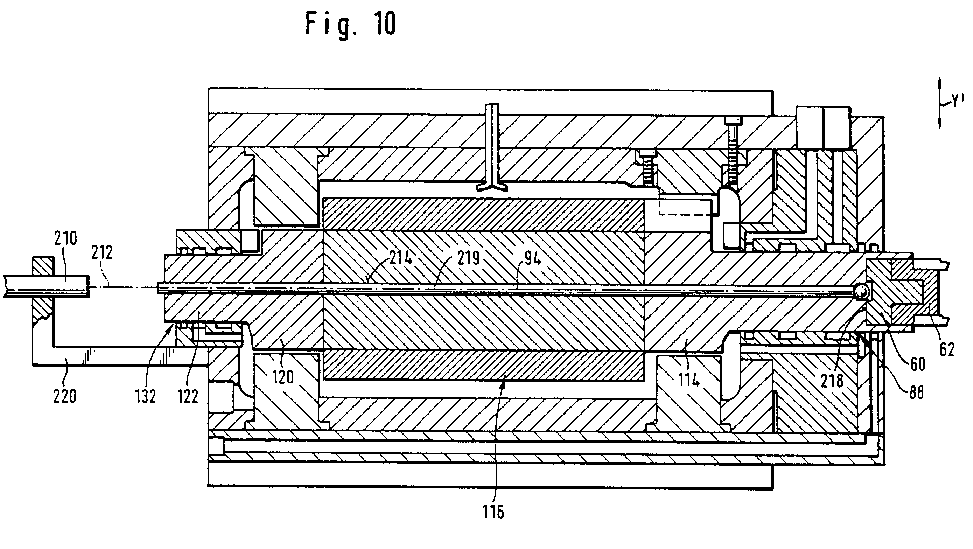

Fig.10    einen Schnitt ähnlich Fig. 5 durch eine Variante des zweiten Ausführungsbeispiels;

Fig.11    einen Schnitt ähnlich Fig. 5 durch eine Variante des zweiten Ausführungsbeispiels;

Fig.12    einen Schnitt ähnlich Fig. 5 durch eine weitere Variante des zweiten Ausführungsbeispiels;

Fig.13    ein drittes Ausführungsbeispiel;

Fig.14    eine Seitenansicht des dritten Ausführungsbeispiels in Fig.12 und

Fig.15    einen Schnitt längs Linie 15-15 in Fig. 13.

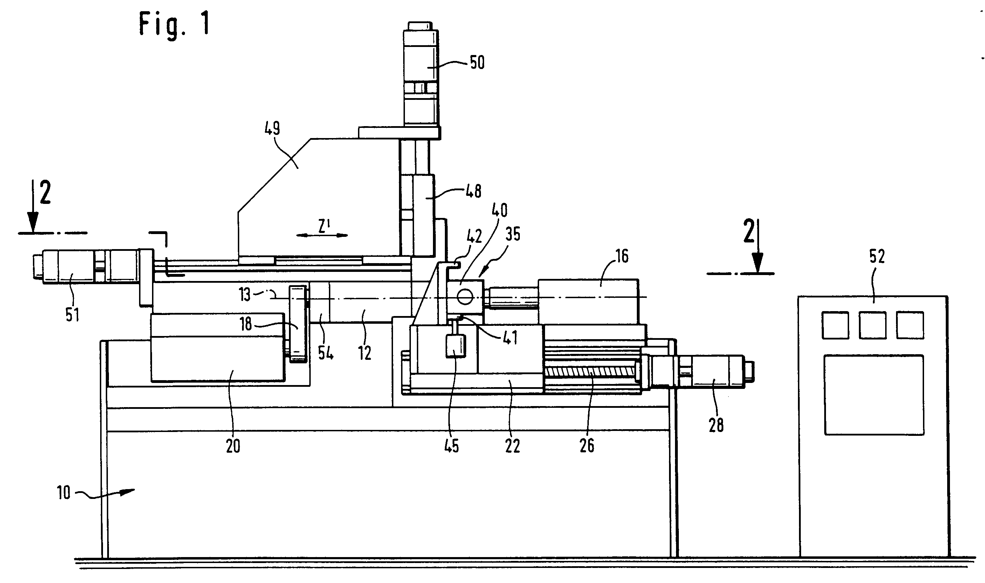

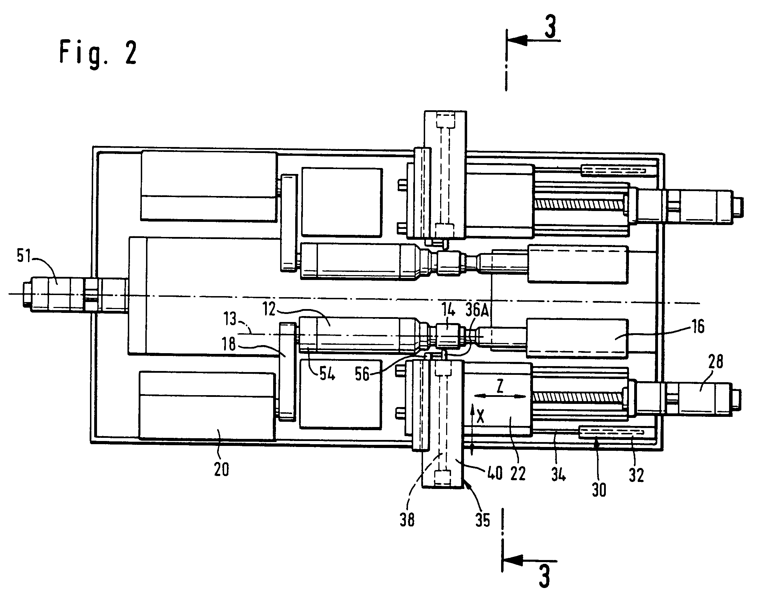

Ein erstes Ausführungsbeispiel einer erfindungsgemäßen Maschine zum Unrunddrehen von Kolben umfaßt, wie in den Fig. 1 bis 3 dargestellt, ein als Ganzes mit 10 bezeichnetes Maschinenbett, an welchem eine Spindel 12 im wesentlichen mit horizontaler Spindelachse 13 gehalten ist, in welcher ein Kolben 14 zur Drehbearbeitung einspannbar ist, welcher seinerseits der Spindel 12 gegenüberliegend durch eine ebenfalls am Maschinengestell 10 koaxial zur Spindel 12 angeordnete rotierende Spannpinole 16 gehalten ist. Die Spindel 12 ist vorzugsweise über einen Treibriemen 18 durch einen Spindelmotor 20 angetrieben, welcher auf dem Maschinenbett 10 sitzt.

Die Spindel 12 und die Spannpinole 16 sind stationär an dem Maschinenbett 10 gehalten und die Spannpinole 16 ist hydraulisch zum Einspannen des Kolbens 14 betätigbar.

Zur Bearbeitung des Kolbens 14 ist an dem Maschinenbett 10 ein in Z-Richtung parallel zur Spindelachse 13 auf Z-Führungen 24 verschieblich gelagerter Z-Schlitten 22 vorgesehen, welcher durch eine Kugelrollspindel 26, angetrieben von einem Z-Achsen-Antrieb 28 in der Z-Richtung definiert verstellbar ist.

Zur Erfassung der Position des Z-Schlittens 22 relativ zu dem Maschinenbett 10 ist ein Z-Achsen-Sensor 30 vorgesehen, welcher vorzugsweise einen optisch von einer Abtasteinheit 32 abtastbaren Linearmaßstab 34 aufweist.

Auf dem Z-Schlitten 22 ist ein X-Achsen-Antrieb 35 vorgesehen, welcher einen als Linearmotor ausgebildeten in einer senkrecht zur Z-Richtung und somit senkrecht zur Spindelachse 13 und vorzugsweise horizontal verlaufenden in X-Richtung verschieblichen Werkzeugträger 38 und eine Linearverschiebeeinrichtung 40 aufweist, mittels welcher der Werkzeugträger 38 in der X-Richtung gesteuert positionierbar ist.

Der in der X-Richtung verschiebliche Werkzeugträger 38 trägt - wie später im Detail beschrieben - zwei in X-Richtung auf den Kolben 14 zustellbare Werkzeuge 36A und 36B, wobei die gesamte Anordnung des Werkzeugträgers 38 mit der Linearverschiebeeinrichtung 40 nachfolgend noch im Detail beschrieben ist. Die in X-Richtung auf den Kolben 14 zustellbaren Werkzeuge 36A und 36B dienen dazu, den Kolben unrund zu bearbeiten.

Um die beiden Werkzeuge 36A und 36B wechselweise in Einsatz bringen zu können, ist die Linearverschiebeeinrichtung 40 ihrerseits zwischen zwei Anschlagstellungen definierenden Anschlägen 41 und 42, die als Anschlagleisten ausgebildet sind, in einer Werkzeugwechselrichtung 43 auf Verschiebeführungen 44 bewegbar. Hierzu ist ein Antrieb 45 vorgesehen, welcher entweder so auf die Linearverschiebeeinrichtung 40 einwirkt, daß diese entweder an dem Anschlag 41 anliegt, wobei der Kolben 14 mit dem Werkzeug 36A bearbeitet wird, oder an dem Anschlag 42, wobei der Kolben 14 mit dem Werkzeug 36B bearbeitet wird.

Die Anschläge 41 und 42 sind dabei so angeordnet, daß die Schneiden der Werkzeuge 36A und 36B dann, wenn diese in ihrer Bearbeitungsposition stehen, in derselben Schnittebene 46 liegen, die vorzugsweise durch die Spindelachse 13 hindurchverläuft.

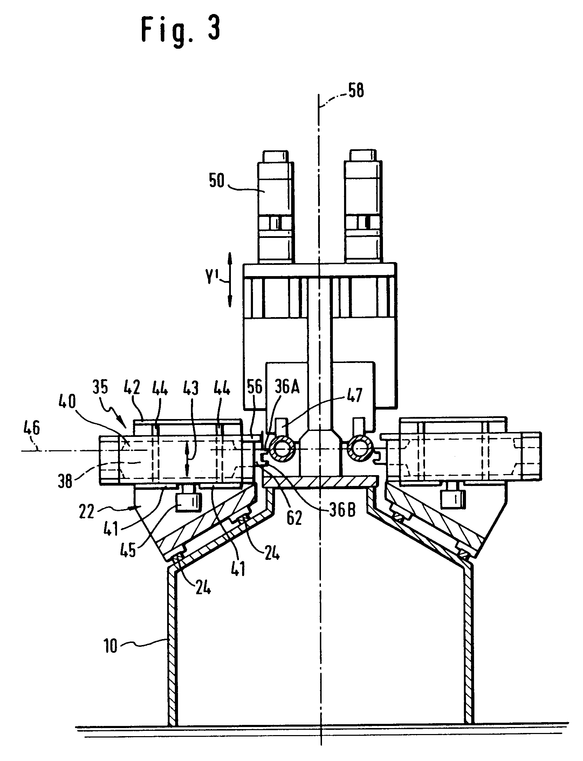

Um in derselben Aufspannung des Kolbens 14 in diesen auch noch Kolbenringnuten einarbeiten zu können, ist, wie in Fig. 1 und 3 dargestellt, in einer Y'-Richtung, die senkrecht auf der X-Richtung und der Z-Richtung sowie der Spindelachse 13 steht, ein Y'-Werkzeug 47 vorgesehen, welches an einem Y'-Schlitten 48 gehalten ist, der seinerseits verschieblich an einem Z'-Schlitten 49 gelagert und in der Y'-Richtung durch einen Y'-Achsen-Antrieb 50 positionierbar ist.

Der Z'-Schlitten 49 ist seinerseits an dem Maschinenbett 10 in Z'-Richtung, welche parallel zur Z-Richtung und zur Spindelachse 13 verläuft, verschieblich gelagert und durch einen Z'-Achsen-Antrieb 51 in der Z'-Richtung verstellbar. Vorzugsweise ist der Z'-Schlitten auf der Seite des Kolbens 14 angeordnet, auf welcher die Spindel 12 liegt und sitzt über der Spindel 12, wobei der Z'-Achsen-Antrieb 51 auf der der Spindel 12 gegenüberliegenden Seite des Spindelmotors 20 sitzt.

Zur Steuerung des Werkzeugträgers 38 ist eine als Ganzes mit 52 bezeichnete Steuereinrichtung vorgesehen, welche über den Z-Achsen-Sensor 30 den Z-Achsen-Antrieb 28 und somit den Z-Schlitten 22 ansteuert, die Spindel 12 über den Spindelmotor 20 als drehwinkelgesteuerte C-Achse ansteuert, wozu als C-Achsen-Sensor ein Drehwinkelgeber 54 koaxial zur Spindel 12 vorgesehen und mit dieser verbunden ist. Ferner wird der Vorschub des die X-Werkzeuge 36A, B tragenden Werkzeugträgers 38 über die Linearverschiebeeinrichtung 40 gesteuert, wobei zur Erfassung der Bewegungen des Werkzeugträgers 38 in X-Richtung ein X-Achsen-Sensor 56 vorgesehen ist, welcher die Relativbewegungen des Werkzeugträgers 38 relativ zum Z-Schlitten 22 erfaßt.

Die erfindungsgemäße Vorrichtung zum Unrunddrehen von Kolben ist ferner bevorzugt symmetrisch zu einer Mittelebene 58 aufgebaut und erlaubt die Bearbeitung zweier Kolben 14 gleichzeitig, wobei alle vorstehend genannten Teile bis auf den Z'-Achsen-Antrieb 50 und den Z'-Schlitten 46 doppelt vorhanden sind.

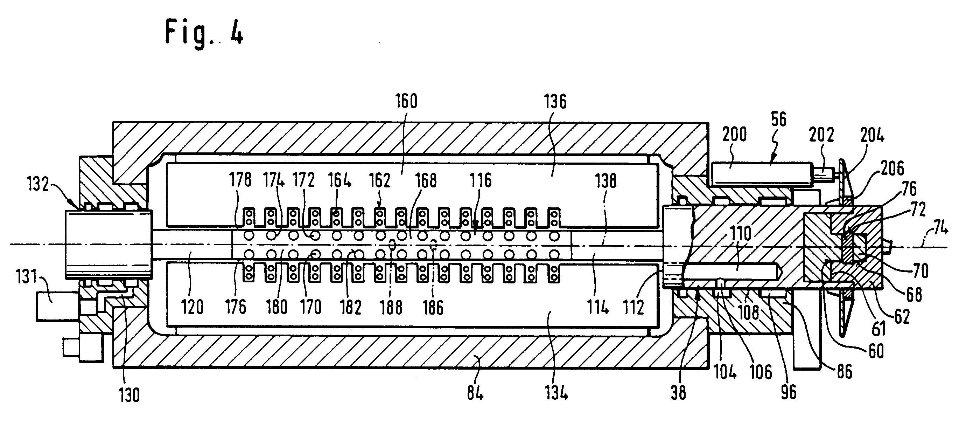

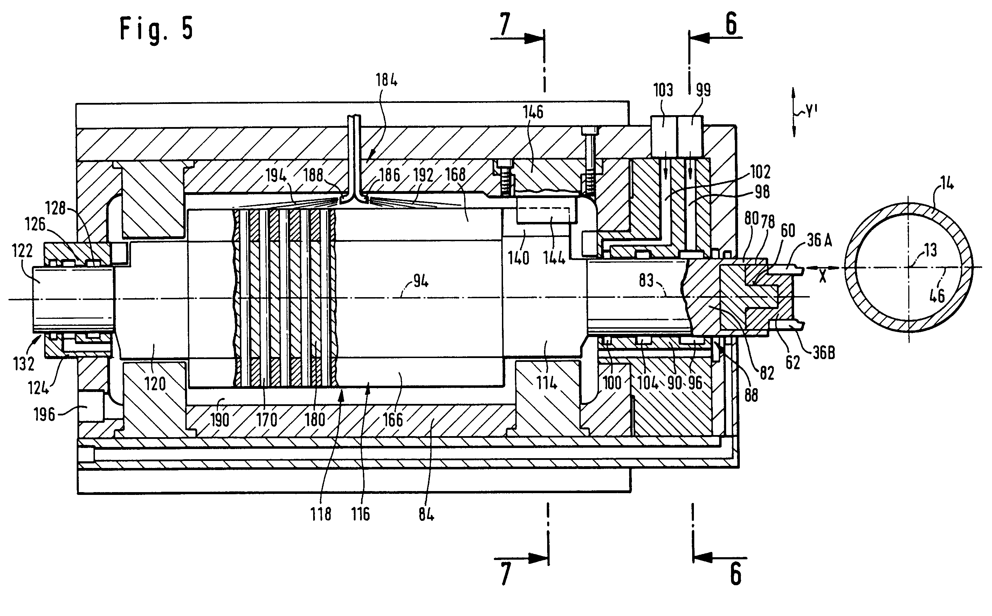

Die Linearverschiebeeinrichtung 40 mit dem Werkzeugträger 38, in Fig. 4 und 5 in vergrößertem Maßstab dargestellt, umfaßt eine Werkzeughalteraufnahme 60, in welche ein Werkzeughalter 62 einsetzbar und gegen eine Maßanschlagfläche 61 der Werkzeughalteraufnahme 60 anlegbar ist, der zwei in Y'-Richtung übereinander angeordnete Werkzeuge 36A und 36B trägt. Dieser Werkzeughalter 62 umfaßt eine zentrale Bohrung 68, in welche ein Zentrierzapfen 70 der Werkzeughalteraufnahme 60 einführbar ist. Zum Verspannen des Werkzeughalters 62 ist die zentrale Bohrung 68 noch zusätzlich mit einer ringförmigen Nut 72 versehen, in welche radial zu einer Zapfenachse 74 verschiebliche Spannkeile 76 der Werkzeughalteraufnahme 60 eingreifen, um den Werkzeughalter 62 zu spannen und gegen die Maßanschlagfläche 61 anzulegen. Darüberhinaus ist der Werkzeughalter 62 noch an seiner der Werkzeughalteraufnahme 60 zugewandten Außenseite 78 von zylindersegmentartig ausgebildeten Umfassungen 80 der Werkzeughalteraufnahme 60 umgriffen.

Die Werkzeughalteraufnahme 60 liegt unmittelbar vor einem vorderen zylindrischen Führungskörper 82 des Werkzeugträgers 38, welcher zusammen mit einer an einem Gehäuse 84 gehaltenen vorderen Lagerschale 86 ein als Ganzes mit 88 bezeichnetes vorderes Gleitlager bildet.

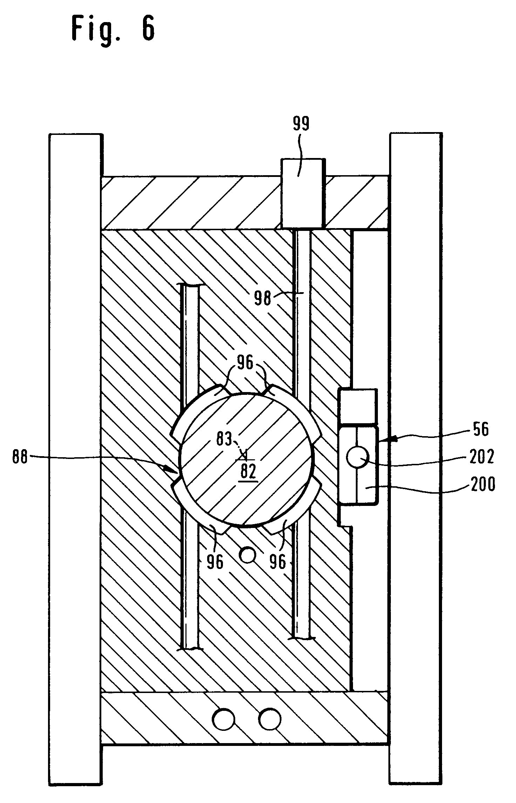

Dieses vordere Gleitlager 88 ist als hydrostatisches Lager ausgebildet und umfaßt, wie in Fig. 4, 5 und 6 dargestellt, einen den als Gleitstück dienenden zylindrischen vorderen Führungskörper 82 aufnehmenden Lagerring 90, wobei eine Zylinderachse 83 des vorderen Führungskörpers 82 als Führung und des Lagerrings 90 mit einer Längsachse 94 des Werkzeugträgers 38 zusammenfallen.

Der Lagerring 90 weist, wie in den Fig. 4, 5 und 6 dargestellt, vordere, im Winkelabstand voneinander angeordnete und sich über einen Winkelbereich erstreckende Drucktaschen 96 auf, welche jeweils über eine eigene Druckleitung 98 mit Druckmedium beaufschlagbar sind. Desgleichen sind in dem Lagerring 90 im Abstand von den vorderen Drucktaschen 96 hintere Drucktaschen 100 angeordnet, die ebenfalls jeweils über eine eigene Druckleitung 102 mit Druckmedium beaufschlagbar sind. Zwischen den vorderen Drucktaschen 96 und den hinteren Drucktaschen 100 ist eine Sammelnut 104 in dem Lagerring 90 vorgesehen, welche rings um den zylindrischen vorderen Führungskörper 82 umläuft und mit einer Rücklaufbohrung 106 verbunden ist, die von einer Außenmantelfläche 108 des vorderen Führungskörpers 82 in diesen hinein verläuft und in einen in dem vorderen Führungskörper 82 parallel zu dessen Längsachse 94 verlaufenden Rücklaufkanal 110 mündet. Dieser Rücklaufkanal 110 tritt an einer der Werkzeughalteraufnahme 60 abgewandten rückwärtigen Stirnseite 112 des vorderen Führungskörpers 82 aus diesem aus.

An den vorderen Führungskörper 82 schließt sich an dessen der Werkzeughalteraufnahme 60 gegenüberliegenden Seite ein vorderes Zwischenstück 114 an, an welchem auf seiner dem vorderen Führungskörper 82 gegenüberliegenden Seite ein Sekundärteil 116 eines als Ganzes mit 118 bezeichneten Linearmotors gehalten ist. Dieses Sekundärteil 116 ist auf seiner dem vorderen Zwischenstück 114 gegenüberliegenden Seite wiederum an einem hinteren Zwischenstück 120 gehalten, an welches sich ein hinterer als Gleitstück dienender Führungskörper 122 anschließt, der ebenfalls eine zur Längsachse 94 koaxiale zylindrische Form aufweist und in einer hinteren Lagerschale 124 gehalten ist, welche ihrerseits mit einem den hinteren als Führung dienenden Führungskörper 122 umschließenden Lagerring 126 versehen ist, der ebenfalls mit vier im Winkelabstand voneinander angeordneten und sich ebenfalls über einen Winkelbereich erstreckenden Drucktaschen 128 versehen ist, die jeweils über eigene Druckleitungen 130 mit Druckmedium beaufschlagbar sind.

Somit bilden die Drucktaschen 128 zusammen mit dem Lagerring 126 und dem hinteren Führungskörper insgesamt ein hinteres Gleitlager 132.

Jede einzelne der Druckleitungen 98, 102 und 130 und somit jede einzelne der Drucktaschen 96, 100 und 128 wird über einen eigenen Regler 99, 103 und 131 versorgt, welcher den Taschendurchfluß entsprechend dem Taschendruck regelt und zwar so, daß bei zunehmendem Taschendruck der Taschendurchfluß linear zunimmt.

Der Werkzeugträger 38 umfaßt somit den hinteren Lagerkörper 122, das Zwischenstück 120, integriert das Sekundärteil 116 des Linearmotors 18, setzt sich dann in dem Zwischenstück 22 und dem vorderen Führungskörper 82 bis zur Werkzeughalteraufnahme 60 fort und weist auch den auswechselbaren Werkzeughalter 62 auf. Dabei wird der Werkzeugträger 38 durch das vordere Gleitlager 88 und das hintere Gleitlager 132, insbesondere deren Lagerschalen 86 und 124, an dem Gehäuse 84 geführt.

Dieses Gehäuse 84 nimmt außerdem noch Primärteile 134 und 136 des Linearmotors 18 auf, wobei das Primärteil 134 und das Primärteil 136 das Sekundärteil 116 zwischen sich einschließen, welches jeweils gegenüberliegende und den Primärteilen 134 und 136 zugewandte Oberflächen aufweist, zwischen denen eine zu diesen parallele Mittelebene 138 liegt, die ihrerseits vorzugsweise senkrecht auf der Schnittebene 46 steht. Die beiden Primärteile 134 und 136 erstrecken sich dabei im wesentlichen über die gesamte Distanz zwischen den Gleitlagern 88 und 132 und übergreifen in Richtungen parallel zu der Mittelebene 138 das Sekundärteil 116, vorzugsweise zwischen deren Lagerschalen 86 und 124, so daß sich die Zwischenstücke 120, die nicht zum Sekundärteil 116 gehören, zwischen die Primärteile 134 und 136 hinein erstrecken und vorzugsweise senkrecht zu der zwischen den Primärteilen 134 und 136 liegenden Mittelebene 138 die gleiche Dicke wie das Sekundärteil 116 aufweisen.

Zur Verdrehsicherung und Drehmomentabstützung des Werkzeugträgers 38 ist das vordere Zwischenstück 114 mit einem sich symmetrisch zu der zwischen den beiden Primärteilen 134 und 136 liegenden Mittelebene 138 erstreckenden Keil 140 versehen, welcher ebenfalls noch zwischen den Primärteilen 134 und 136 liegt und in einer Keilnut 142 läuft, welche in einer zwischen die Primärteile 134 und 136 vorspringenden Nase 144 eingearbeitet ist, wobei die Nase 144 Teil eines Füllstücks 146 ist, das seinerseits an dem Gehäuse 84 gehalten ist.

Beide Keilflächen 148 des Keils 140 sind mit Öltaschen 150, 151 versehen, welchen gegenüberliegend Öffnungen 152, 153 von durch das Füllstück 146 und die Nase 144 geführten Druckkanälen 154, 155 angeordnet sind, durch welche Druckmedium in den Öltaschen 150, 151 eingebracht wird, so daß der Keil 140 spielfrei symmetrisch zur Mittelebene 138 in der Keilnut 142 geführt ist.

Jede der Druckkanäle 154 und 155 ist mit einem eigenen Regler 157, 159 versehen der den Druck und den Taschendurchfluß in den Öltaschen 150, 151 so steuert, daß bei steigendem Druck der Taschendurchfluß linear zunimmt.

Damit ist der Werkzeugträger 38 einerseits zur Aufnahme von quer zu der Längsachse 94 wirkenden Kräften durch die Werkzeuge 64 oder 66 in den Gleitlagern 88 und 132 geführt, wobei das Gleitlager 88 die größten derartigen Kräfte aufnimmt und außerdem noch durch eine von dem Keil 140 und der Keilnut 142 gebildeten Verdrehsicherung 156 auch noch gegen Verdrehungen um die Längsachse 94 gesichert.

Der Linearmotor 118 ist vorzugsweise als Drehstrom-Asynchron-Linearmotor, vorzugsweise als Doppelkamm-Linearmotor ausgebildet, bei welchem die beiden Primärteile 134 und 136 jeweils aus einem Eisenkern 160 aufgebaut sind, welcher dem Sekundärteil 116 zugewandte und parallel zur Mittelebene 138 quer über die gesamte Breite des Sekundärteils 116 verlaufende Nuten 162 aufweist, in welchen die Erregerwicklungen 164 liegen.

Ferner ist das Sekundärteil 116 mit Kurzschlußwicklungen versehen, welche beiderseits des Sekundärteils 116 verlaufende und sich parallel zur Längsachse 94 über die gesamte Länge des Sekundärteils 116 erstreckende äußere Kupferstäbe 166 und 168 umfassen, die symmetrisch zur Mittelebene 138 liegen und sich über die gesamte Dicke des Sekundärteils 116 senkrecht zur Mittelebene 138 erstrecken. Diese äußeren Kupferstäbe 166 und 168 sind durch parallel zu den Nuten 162 und somit parallel zur Mittelebene 138 und senkrecht zur Längsachse 94 verlaufende Kupferstäbe 170 und 172 elektrisch leitend verbunden, wobei die Kupferstäbe 170 und 172 jeweils in parallel zur Mittelebene 138 liegenden Ebenen so angeordnet sind, daß sie mit ihrer Außenmantelfläche 174 bis zu der jeweiligen Oberfläche 176 bzw. 178 des Sekundärteils 116 reichen, jedoch senkrecht zur Mittelebene 138 einen Abstand voneinander aufweisen.Darüberhinaus weisen die Kupferstäbe 170 und 172 in Längsrichtung des Sekundärteils 116, das heißt in Richtung parallel zur Längsachse 94, einen konstanten Abstand voneinander auf, wobei dieser Abstand vorzugsweise dem Abstand der Nuten 162 in den Primärteilen 134 und 136 entspricht.

Die äußeren Kupferstäbe 166 und 168 sowie die Kupferstäbe 170 und 172 sind vorzugsweise an einem einen Eisenkern bildenden Trägerkörper 180 des Sekundärteils 116 gehalten, welcher seinerseits senkrecht zur Mittelebene 138 dieselbe Dicke wie die äußeren Kupferstäbe 166 und 168 aufweist und sich zwischen diesen erstreckt. Dieser Trägerkörper 180 ist seinerseits mit Bohrungen 182 versehen, in welchen die Kupferstäbe 170 und 172 liegen.

Um Verformungen des Sekundärteils 116 durch ungleichmäßige Temperatur innerhalb desselben zu vermeiden, ist eine Temperierung 184 für dieses vorgesehen, welche vorteilhafterweise Ölduschen 186, 188 umfaßt, die über dem Sekundärteil 116 angeordnet sind und diese mit Öl duschen, welches über das Sekundärteil 116 in einen unter dem Sekundärteil 116 liegenden Sumpf 190 abläuft. Damit dies möglichst gleichmäßig erfolgt sind die Ölduschen 186 und 188 ungefähr mittig des Sekundärteils 116 angeordnet und verteilen das Öl in entgegengesetzte Richtungen parallel zur Längsachse 94 des Sekundärteils 116, wobei Duschstrahlen 192 und 194 derselben auf dem oberen Kupferstab 168 auftreffen.

Vorzugsweise wird als Öl für die Öldusche das für die hydrostatischen Gleitlager 88 und 132 verwendete Öl eingesetzt, so daß sich in einfacher Weise das aus diesen Gleitlagern 88, 132 auslaufende Öl in den Sumpf 190, beispielsweise über dem Rücklaufkanal 110 einleiten und dann von diesem ausgehend wiederverwenden läßt. Hierzu dient der in den Ölsumpf 190 mündende Ölrücklauf 196.

Der Drehstrom-Asynchron-Linearmotor 118 arbeitet nun so, daß jeweils durch Erregerwicklungen 164 ein Feld erzeugt wird, welches in der von den Kupferstäben 170 gebildeten Ebene parallel zur Mittelebene 138 durch mehrere elektrisch leitende Verbindungen mit den äußeren Kupferstäben 166 und 168 Kreisströme auftreten läßt, sowie in der durch die Kupferstäbe 172 gebildeten Ebene aufgrund deren elektrischer Verbindung mit den äußeren Kupferstäben 166 und 168. Diese Kreisströme tragen ihrerseits zu einem magnetischen Feld bei, das mit dem von den Erregerwicklungen 164 erzeugten Feld wechselwirkt und somit zu einer Verschiebebewegung des Werkzeugträgers 38 in X-Richtung führt.

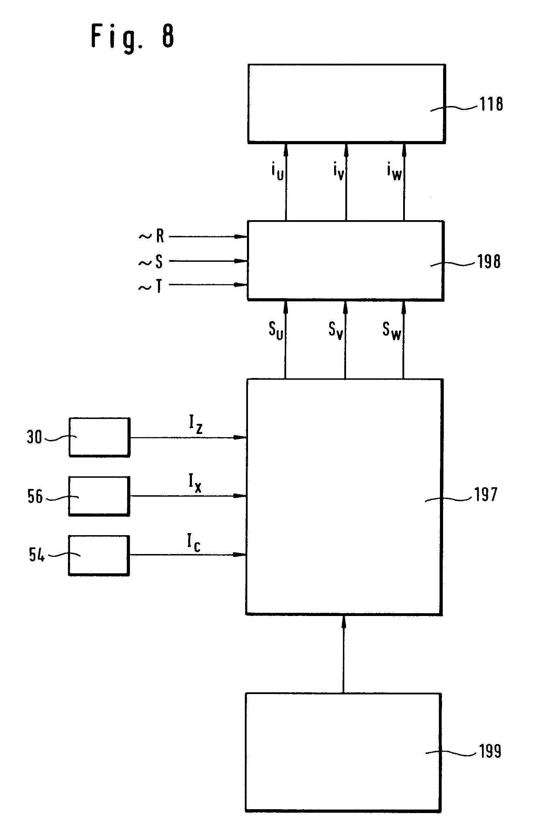

Zur Ansteuerung des Drehstrom-Asynchron-Linearmotors 118 umfaßt die Steuereinrichtung 52, wie in Fig. 8 schematisch dargestellt, einen X-Achsen-Rechner 197, welcher den vom Z-Achsen-Sensor 30 gemessenen Wert Iz, den vom X-Achsen-Sensor 56 gemessenen Wert Ix und den vom C-Achsen-Sensor 54 gemessenen Wert Ic erfaßt. Mit diesen Werten berechnet der X-Achsen-Rechner 197 aufgrund gespeicherter Soll-Werte direkt Strom-Soll-Werte Su, Sv, Sw, welche ein Umrichter 198 unter Heranziehung von Drehstrom mit den Phasen R, S, T aus dem Netz in Drehstrom mit den Einzelströmen iu, iv und iw umsetzt, mit welchen letztlich die Erregerwicklungen 164 der Primärteile 134 und 136 bestromt werden.

Darüberhinaus wird der eigenständig arbeitende X-Achsen-Rechner 197 von einer die gesamte Steuereinrichtung 52 überwachenden übergeordneten Maschinensteuerung 199 angesteuert.

Weitere Einzelheiten, betreffend die Merkmale, Ansteuerung und Funktion eines derartigen Asynchron-Linearmotors sind ausführlich in der Zeitschrift "Werkstattstechnik" 79 (1989), Seite 647-650 offenbart, auf welche vollinhaltlich Bezug genommen wird

Zur Erfassung der Verschiebung des Werkzeugträgers 38 relativ zum Z-Schlitten 22 ist - wie in Fig. 4 dargestellt - an dem Gehäuse 84, das seinerseits in X-Richtung unverschieblich auf dem Z-Schlitten 22 montiert ist, der X-Achsen-Sensor 56 gehalten. Dieser ist mit einem stationären Teil 200 an der vorderen Lagerschale 86 montiert, während ein beweglicher Teil 202 desselben fest mit einem versteiften Arm 204 verbunden ist, der seinerseits an einem die Umfassungen 80 der Werkzeughalteraufnahme 60 umschließenden und mit diesem verbundenen Ring 206 gehalten ist. Damit greift ein Maßangriffspunkt des Arms 204 unmittelbar an der Werkzeughalteraufnahme 60 und somit in unmittelbarer Nachbarschaft des Werkzeughalters 62 an, um jegliche Längenveränderungen der übrigen Teile des Werkzeugträgers 38 zu eliminieren.

Vorzugsweise ist der X-Achsen-Sensor 56 ein optischer Längensensor, wobei das bewegliche Teil 202 ein optisch ablesbarer Linearmaßstab ist.

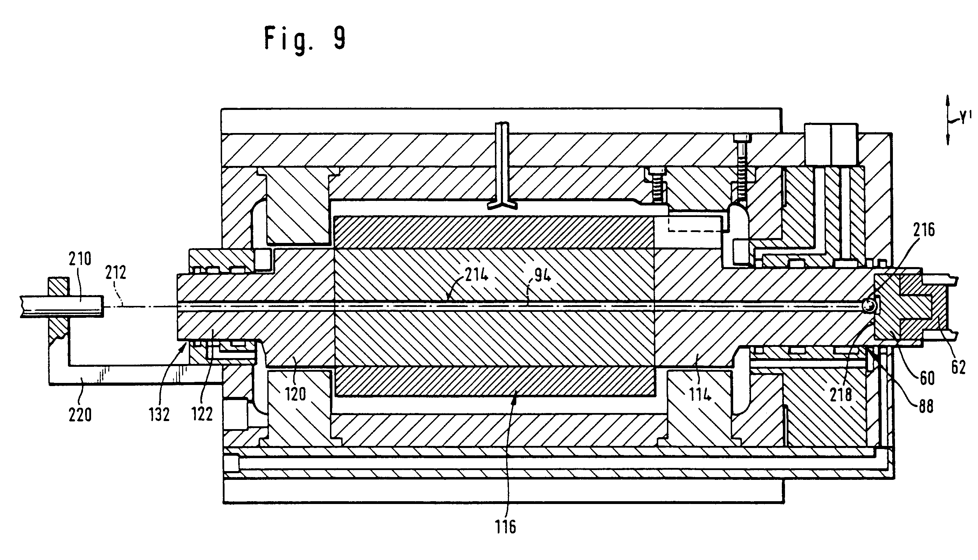

Bei einem zweiten Ausführungsbeispiel, dargestellt in Fig. 9, findet als X-Achsen-Sensor 56 ein Laserinterferrometer Verwendung, welches einen Meßkopf 210 aufweist, welcher koaxial zur Längsachse 94 hinter dem hinteren Gleitlager 132 angeordnet ist. Dieser Meßkopf 210 umfaßt einen einen Laserstrahl 212 aussendenden Laser, wobei der Meßkopf 210 so angeordnet ist, daß der Laserstrahl 212 diesen koaxial zur Längsachse 94 in Richtung des hinteren Führungskörpers 122 verläßt. Sowohl der hintere Führungskörper 122 als auch das Zwischenstück 120 sowie der Trägerkörper 180 des Sekundärteils 116, das Zwischenstück 114 und der vordere Führungskörper 82 sind mit einer koaxial zur Längsachse 94 verlaufenden Bohrung 214 versehen, welche einen Kanal für den Laserstrahl 212 bildet, damit dieser all diese Teile durchsetzt und auf einen Reflektor 216 trifft, welcher den Laserstrahl ebenfalls koaxial zur Längsachse 94 zurück zum Meßkopf 210 reflektiert. Der Reflektor 216 ist vorzugsweise an einem dem vorderen Führungskörper 82 zugewandten Ende 218 der Werkzeughalteraufnahme 60 fest mit der Werkzeughalteraufnahme 60 verbunden, so daß auch an diesem Ende 218 der Maßangriffspunkt des Laserinterferrometers liegt. Im einfachsten Fall handelt es sich bei dem Reflektor 216 um eine Kugel.

Das zweite Ausführungsbeispiel läßt sich noch dadurch abwandeln, daß in die Bohrung 214 ein Lichtleiter 219 eingesetzt ist, der von dem Reflektor 216 bis mindestens zu dem hinteren Führungskörper 122 reicht und somit die Einflüsse von variierendem Druck und variierender Temperatur in der Bohrung 214 eliminiert. Zweckmäßigerweise sitzt dabei der Reflektor 216 an dem diesem zugewandten Ende des Lichtleiters 219.

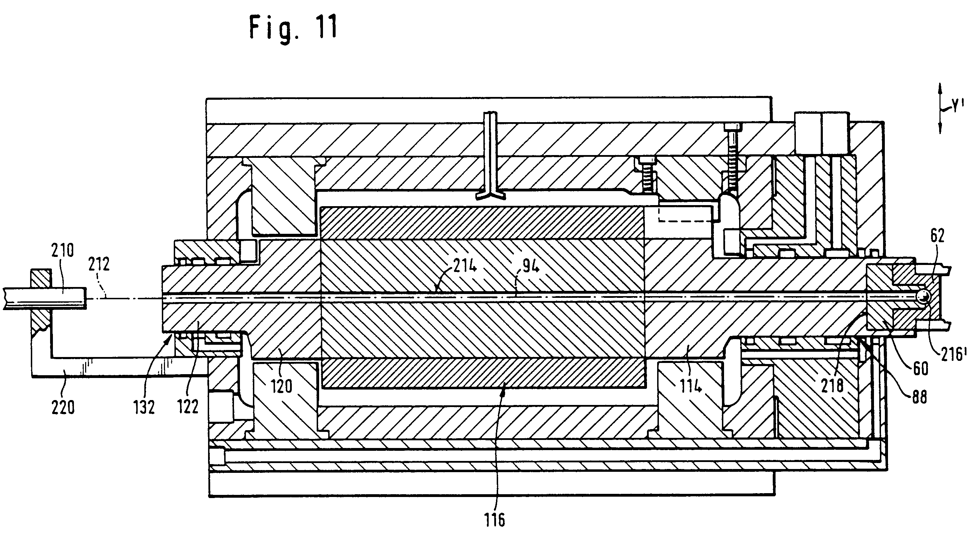

Alternativ dazu ist, um eine noch genauere Messung zu erreichen, bei einer in Fig. 11 dargestellten weiteren Variante des zweiten Ausführungsbeispiels vorgesehen, den Reflektor 216' unmittelbar an dem Werkzeughalter 62 anzuordnen, so daß der Maßangriffspunkt an dem Werkzeughalter 62 selbst liegt.

Dadurch daß der Meßkopf 210 beispielsweise über einen Haltewinkel 220 fest mit dem Gehäuse 84 und somit auch mit dem Z-Schlitten 22 verbunden ist, ist der Meßkopf 210 des Laserinterferrometers in der Lage, einen Abstand zwischen einem Fixpunkt in X-Richtung auf dem Z-Schlitten 22 und dem Reflektor 196 und 196' exakt zu erfassen, wobei vorteilhafterweise sich alle Längenausdehnungen des Werkzeugträgers 38 nicht auf die Meßgenauigkeit auswirken, sondern entweder die exakte Lage der Werkzeughalteraufnahme 60 oder auch des Werkzeughalters 62 in X-Richtung ermittelt wird.

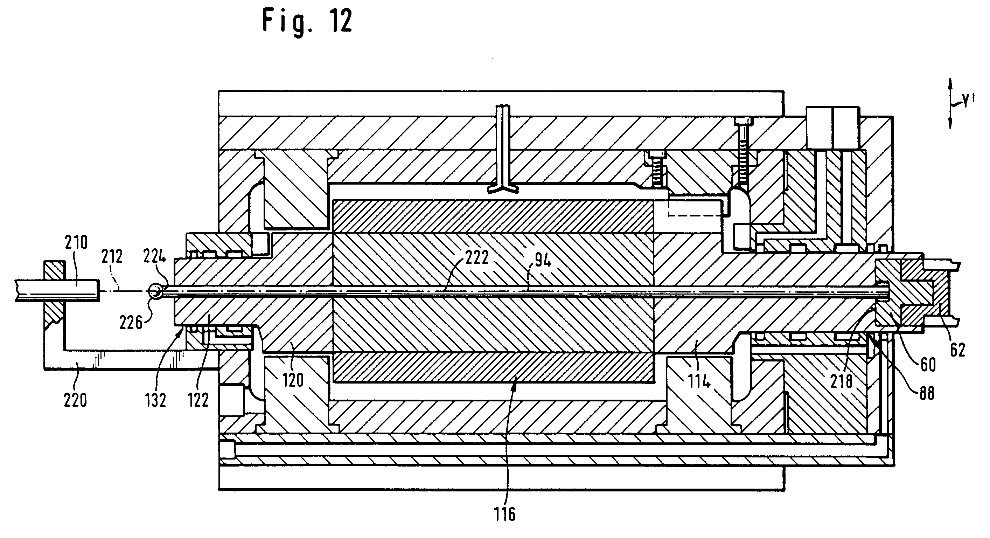

Bei einer weiteren Variante des X-Achsen-Sensors 56, dargestellt in Fig. 12, greift an der Werkzeughalteraufnahme 60 ein als Zwischenelement dienender Stab 222 eines Materials mit zu vernachlässigender Längenausdehnung, beispielsweise ein Invar- oder Glasstab, an, welcher in der Bohrung 214 liegt und sich durch den vorderen Führungskörper 82, das Zwischenstück 114, den Trägerkörper 180 des Sekundärteils 116, das Zwischenstück 120 und den Führungskörper 122 erstreckt und über diesen auf dessen Rückseite übersteht. An seinem rückwärtigen Ende 224 trägt dieser Stab 222 den Reflektor 226, so daß der Meßkopf 210 des Laserinterferrometers den Abstand zwischen einer auf dem Z-Schlitten 22 in X-Richtung festliegenden Position und dem Reflektor 226 erfaßt, wobei die Position des Reflektors 226 durch den längenunveränderlichen Stab 212 entsprechend der Position der Werkzeughalteraufnahme 60 variiert. Der Stab 222 ist bei dieser Variante fest mit der Werkzeughalteraufnahme 60 verbunden und liegt, um eine vom Werkzeugträger 38 abweichende Längenausdehnung zu erlauben, frei verschiebbar in der Bohrung 214.

Bei einer weiteren Variante ist vorgesehen, den Stab 222 bis zum Werkzeughalter 62 durch die Werkzeughalteraufnahme 60 hindurchzuführen, so daß der Reflektor 216 die genaue Position des Werkzeughalters 62 repräsentiert.

Bei dem Laserinterferrometer, bestehend aus Meßkopf 210 und dem Reflektor 216 oder 226 handelt es sich vorzugsweise um ein Laserinterferrometer der Hommel-Werke gemäß dem deutschen Patent 36 30 887.

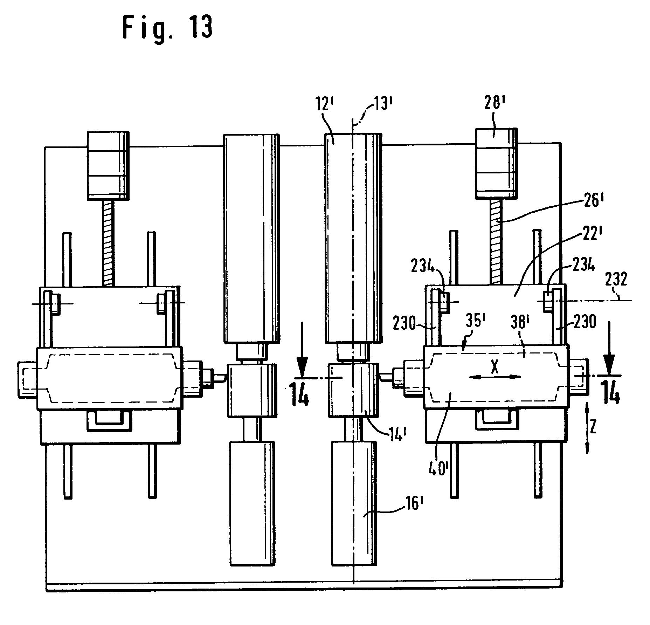

Bei einem dritten Ausführungsbeispiel der erfindungsgemäßen Maschine dargestellt in Fig. 13 bis 15, sind diejenigen Teile, insoweit, als sie mit denjenigen des ersten Ausführungsbeispiels identisch sind, mit denselben Bezugzeichen versehen, so daß auf die Ausführungen hierzu im ersten Ausführungsbeispiel voll inhaltlich Bezug genommen wird. Zur Unterscheidung sind die Bezugzeichen lediglich mit einem nach oben gesetzten Strich versehen.

Das dritte Ausführungsbeispiel zeigt, genau wie das erste Ausführungsbeispiel, ein Maschinenbett 10'an welchem die Spindel 12' mit allerdings in vertikaler Richtung verlaufender Spindelachse 13' angeordnet ist. Unterhalb der Spindel 12' ist koaxial zu deren Spindelachse 13' die Spannpinole 16'angeordnet, wobei zwischen der Spannpinole 16' und der Spindel 12' der Kolben 14' zur Unrundbearbeitung einspannbar ist.

Darüberhinaus ist an dem Maschinenbett 10' der Z-Schlitten 22' durch den Z-Achsen-Antrieb 28' und die Kugelrollspindel 26' verschieblich gelagert, wobei in diesem Fall die Z-Richtung nach wie vor parallel zur Spindelachse 13' ausgerichtet ist und somit ebenfalls in vertikaler Richtung verläuft. Auf dem Z-Schlitten 22' sitzt die Linearverschiebeeinrichtung 40' mit dem Werkzeugträger 38', welcher in zur Spindelachse 13' senkrechter X-Richtung, die nunmehr horizontal verläuft, verschieblich ist.

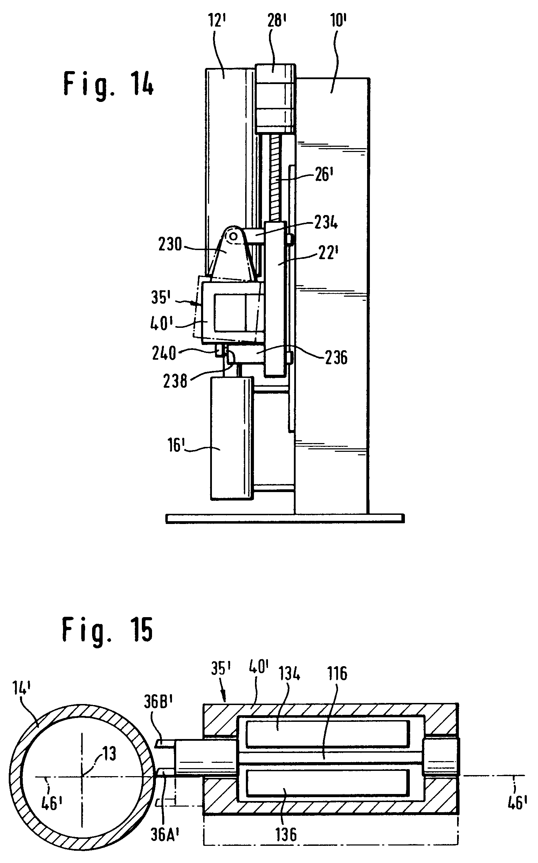

Die Linearverschiebeeinrichtung 40' ist als Ganzes mittels zweier Schwenkhebel 230 um eine Schwenkachse 232 an Lagerarmen 234 des Z-Schlittens 22' in zwei Stellungen, in Figur 13 und 14 entweder durchgezogen oder strichpunktiert dargestellt, verschwenkbar, wobei in der in Figur 13 und 14 durchgezogen gezeichneten Darstellung das Werkzeug 36A' sich in einer Bearbeitungsposition für den Kolben 14' befindet, während in der strichpunktiert gezeichneten Stellung das Werkzeug 36B' in der Bearbeitungsposition für den Kolben 14' steht.

Zum Verschwenken der Linearverschiebeeinrichtung 40' in die beiden Stellungen ist eine Schwenkantriebsvorrichtung 236 vorgesehen, welche auf der der Schwenkachse 232 gegenüberliegenden Seite der Linearverschiebeeinrichtung 40'angeordnet ist und mit einem beweglichen Glied 238 auf einen Arm 240 wirkt, der fest mit der Linearverschiebeeinrichtung 40' verbunden ist. Dadurch kann die Linearverschiebeeinrichtung 40' um die Kippachse 232 in die beiden vorstehend beschriebenen Stellungen verschwenkt werden.

Durch die vertikale Anordnung der Spindelachse 13' steht auch die Schnittebene 46' für die Werkzeuge 36A' und 36B' senkrecht, wobei bei diesem Ausführungsbeispiel, im Gegensatz zum ersten Ausführungsbeispiel, das Sekundärteil 116' mit seiner Mittelebene 138' parallel zu der Schnittebene 46' steht.

Im übrigen arbeitet das dritte Ausführungsbeispiel der erfindungsgemäßen Maschine in gleicher Weise wie das erste Ausführungsbeispiel.

**Patentansprüche**

1. Vorrichtung zum Undrundbearbeiten von Werkstücken, umfassend ein Maschinengestell, eine am Maschinengestell gehaltene und als C-Achse betriebene Werkstückspindel für ein zu bearbeitendes Werkstück, einen auf dem Maschinengestell in Z-Richtung zur Werkstückspindel verschiebbaren Z-Schlitten mit einem Z-Achsen-Antrieb, einen auf dem Z-Schlitten angeordneten und als Linearmotor ausgebildeten X-Achsen-Antrieb, mit welchem ein Werkzeug in X-Richtung auf das Werkstück zustellbar ist, und eine numerische Steuerung zur Ansteuerung des X-Achsen-Antriebs in Korrelation zur Drehung der Werkstückspindel, **dadurch gekennzeichnet,** daß der als X-Achsen-Antrieb (35) dienende Linearmotor (38, 40) ein Drehstrom-Asynchron-Linearmotor (118) mit einem in X-Richtung fest auf dem Z-Schlitten (22) angeordneten Primärteil (134, 136) und einem relativ zu diesem beweglichen Sekundärteil (116) ist.

2. Vorrichtung nach Anspruch 1, dadurch gekennzeichnet, daß der Linearmotor (118) ein Doppelkamm-Linearmotor mit zwei gegenüberliegenden Primärteilen (134, 136) ist, die das Sekundärteil (116) zwischen sich einschließen.

3. Vorrichtung nach Anspruch 1 oder 2, dadurch gekennzeichnet, daß das Primärteil (134, 136) das Sekundärteil (116) in X-Richtung überragt.

4. Vorrichtung nach einem der voranstehenden Ansprüche, dadurch gekennzeichnet, daß das Primärteil (134, 136) das Sekundärteil (116) in Richtung quer zur X-Richtung überragt.

5. Vorrichtung nach einem der voranstehenden Ansprüche, dadurch gekennzeichnet, daß das Sekundärteil (116) beiderseits desselben mit in X-Richtung im Abstand voneinander angeordneten Lagern (88, 132) geführt ist.

6. Vorrichtung nach Anspruch 5, dadurch gekennzeichnet, daß die Lager (88, 132) beiderseits des Primärteils (134, 136) angeordnet sind.

7. Vorrichtung nach Anspruch 6, dadurch gekennzeichnet, daß das Sekundärteil (116) zwischen den beiderseits des Primärteils (134, 136) angeordneten Lagern (88, 132) freitragend verläuft.

8. Vorrichtung nach einem der voranstehenden Ansprüche, dadurch gekennzeichnet, daß das Sekundärteil (116) einen tragenden Abschnitt des Werkzeugträgers (38) bildet.

9. Vorrichtung nach Anspruch 8, dadurch gekennzeichnet, daß ein Längsabschnitt des Werkzeugträgers (38) ausschließlich von dem Sekundärteil (116) gebildet ist.

10. Vorrichtung nach einem der voranstehenden Ansprüche, dadurch gekennzeichnet, daß das Sekundärteil (116) auf konstanter Temperatur gehalten ist.

11. Vorrichtung nach Anspruch 10, dadurch gekennzeichnet, daß das Sekundärteil (116) durch Ölumspülung auf konstanter Temperatur gehalten ist.

12. Vorrichtung nach einem der Ansprüche 5 bis 11, dadurch gekennzeichnet, daß die Lager (88, 132) für das Sekundärteil gleichzeitig die Lager für den Werkzeugtgräger (38) sind und diesen in X-Richtung führen.

13. Vorrichtung nach einem der Ansprüche 5 bis 12, dadurch gekennzeichnet, daß die Lager (88, 132) hydrostatische Gleitlager sind.

14. Vorrichtung nach Anspruch 13, dadurch gekennzeichnet, daß die hydrostatischen Gleitlager (88, 132) in X-Richtung stationär auf dem Z-Schlitten (22) angeordnete Führungen (90, 126) und in diesen verschiebliche, mit dem Sekundärteil (116) verbundene Gleitstücke (82, 122) umfassen.

15. Vorrichtung nach Anspruch 14, dadurch gekennzeichnet, daß Längsabschnitte des Werkzeugträgers (38) ausschließlich von den Gleitstücken (82, 122) gebildet sind.

16. Vorrichtung nach Anspruch 14 oder 15, dadurch gekennzeichnet, daß die hydrostatischen Gleitlager (88, 132) Drucktaschen (96, 100, 128) aufweisen, welche mit unter Druck stehendem Öl beaufschlagt sind.

17. Vorrichtung nach Anspruch 16, dadurch gekennzeichnet, daß eine Ölzuführeinrichtung (99, 103) vorgesehen ist, welche den Öldruck in den Drucktaschen (96, 100, 128) so steuert, daß bei steigendem Öldruck auch die Öldurchflußmenge durch die Drucktaschen (96, 100, 128) steigt.

18. Vorrichtung nach einem der Ansprüche 14 bis 17, dadurch gekennzeichnet, daß das für die hydrostatischen Gleitlager verwendete Öl gleichzeitig zur Temperierung des Sekundärteils dient.

19. Vorrichtung nach einem der Ansprüche 5 bis 18, dadurch gekennzeichnet, daß mindestens ein Lager (88) des Sekundärteils (116) eine Drehmomentabstützung (140, 142) aufweist.

20. Vorrichtung nach Anspruch 19, dadurch gekennzeichnet, daß die Drehmomentabstützung (140, 142) hydrostatisch gelagerte Führungsflächen (148) aufweist.

21. Vorrichtung nach Anspruch 20, dadurch gekennzeichnet, daß die Führungsflächen hydrostatisch abgestützte Keilflächen (148) sind.

22. Vorrichtung nach einem der Ansprüche 19 bis 21, dadurch gekennzeichnet, daß zwischen dem Sekundärteil (116) und dem Werkzeug (36) liegenden Lager (82) die Drehmomentabstützung (140, 142) zugeordnet ist.

23. Vorrichtung nach einem der Ansprüche 5 bis 22, dadurch gekennzeichnet, daß das Werkzeug (36) auf der dem Sekundärteil (116) gegenüberliegenden Seite des vorderen Lagers (88) angeordnet ist.

24. Vorrichtung nach einem der voranstehenden Ansprüche, daß das Werkzeug (36) in einem auswechselbaren Werkzeughalter (62) sitzt.

25. Vorrichtung nach Anspruch 24, dadurch gekennzeichnet, daß der Werkzeugträger (38) zur exakten Positionierung des Werkzeughalters (62) eine Maßanschlagfläche (61) aufweist.

26. Vorrichtung nach dem Oberbegriff des Anspruchs 1, dadurch gekennzeichnet, daß ein X-Achsen-Sensor (56) vorgesehen ist, welcher einen am werkzeugseitigen Endbereich des Werkzeugträgers (38) angeordneten Maßangriffspunkt (80, 128) aufweist.

27. Vorrichtung nach Anspruch 26, dadurch gekennzeichnet, daß der Maßangriffspunkt (80, 218) des X-Achsen-Sensors (56) in unmittelbarer Umgebung der Maßanschlagfläche (61) an dem Werkzeugträger (38) liegt.

28. Vorrichtung nach Anspruch 26, daß der Maßangriffspunkt des X-Achsen-Sensors (56) an dem Werkzeughalter (62) liegt.

29. Vorrichtung nach einem der Ansprüche 26 bis 28, dadurch gekennzeichnet, daß der X-Achsen-Sensor (56) einen linearen Inkrementalgeber umfaßt.

30. Vorrichtung nach einem der Ansprüche 26 bis 28, dadurch gekennzeichnet, daß der X-Achsen-Sensor (56) ein Laserinterferrometer umfaßt.

31. Vorrichtung nach Anspruch 30, dadurch gekennzeichnet, daß das Laserinterferrometer einen temperaturstabil mit dem Maßangriffspunkt gekoppelten Reflektor (216) umfaßt.

32. Vorrichtung nach Anspruch 31, dadurch gekennzeichnet, daß der Reflektor (216) am Maßangriffspunkt angeordnet ist.

33. Vorrichtung nach einem der Ansprüche 30 bis 32, dadurch gekennzeichnet, daß der Laserstrahl des Laserinterferrometers durch einen Kanal (214) geführt ist.

**34.** Vorrichtung nach einem der Ansprüche 31 bis 33, dadurch gekennzeichnet, daß der Laserstrahl des Laserinterferrometers von einem Lichtleiter (219) zum Reflektor (216) geführt ist.

**35.** Vorrichtung nach Anspruch 33 oder 34, dadurch gekennzeichnet, daß der Kanal (214) durch den Werkzeugträger (38) bis zu dem Maßangriffspunkt (218) geführt ist.

**36.** Vorrichtung nach einem der Ansprüche 31, 33 oder 34, dadurch gekennzeichnet, daß der Reflektor (216) über ein eine temperaturinvariante Abmessung aufweisendes Zwischenelement (22) mit dem Maßangriffspunkt verbunden ist.

**37.** Vorrichtung nach Anspruch 36, dadurch gekennzeichnet, daß das Zwischenelement (22) durch den Werkzeugträger (38) geführt ist.

**38.** Vorrichtung nach Anspruch 37, dadurch gekennzeichnet, daß das Zwischenelement (22) von einem dem Werkzeug gegenüberliegenden rückwärtigen Ende des Werkzeugträgers (38) in Längsrichtung durch diesen hindurch bis zum Maßangriffspunkt (218) geführt ist.

**39.** Vorrichtung nach einem der Ansprüche 26 bis 38, dadurch gekennzeichnet, daß die Vorrichtung nach einem der Ansprüche 1 bis 25 ausgebildet ist.

**40.** Vorrichtung nach einem der voranstehenden Ansprüche, dadurch gekennzeichnet, daß das Sekundärteil (116) einen Eisenkern (180) mit eingelegten Kurzschlußwicklungen aufweist.

**41.** Vorrichtung nach Anspruch 40, dadurch gekennzeichnet, daß das Sekundärteil (116) in zwei den Primärteilen (134, 136) zugewandten Ebenen liegende Kurzschlußwicklungen aufweist.

**42.** Vorrichtung nach Anspruch 41, dadurch gekennzeichnet, daß zwischen den Ebenen ein Kanal (214) für den X-Achsen-Sensor (56) hindurchläuft.

**43.** Vorrichtung nach einem der voranstehenden Ansprüche, dadurch gekennzeichnet, daß der Drehstrom-Asynchron-Linearmotor durch flußorientierte Stromführung lagegeregelt ist.

**44.** Vorrichtung nach Anspruch 43, dadurch gekennzeichnet, daß der Drehstrom-Asynchron-Linearmotor durch einen Rechner (197) gesteuert ist, welcher Drehstrom-Sollwerte (Su, Sv, Sw) für den Linearmotor errechnet und an einen Umrichter (198) gibt, der Drehstrom aus dem Netz entsprechend den Drehstromsollwerten umrichtet.

**45.** Vorrichtung nach einem der voranstehenden Ansprüche, dadurch gekennzeichnet, daß mehrere in einer zur X- und Z-Richtung senkrechten Richtung (Y') im Abstand voneinander angeordnete Werkzeuge (36A, 36B) vorgesehen sind.

**46.** Vorrichtung nach Anspruch 45, dadurch gekennzeichnet, daß der X-Achsen-Antrieb (35) relativ zum Z-Schlitten (22) in einer senkrecht zur Z-Richtung und X-Richtung verlaufenden Werkzeugwechselrichtung (45) verschiebbar ist.

**47.** Vorrichtung nach Anspruch 46, dadurch gekennzeichnet, daß der X-Achsen-Antrieb (35) zwischen zwei Anschlagstellungen (41, 42) verschiebbar ist.

**48.** Vorrichtung nach Anspruch 47, dadurch gekennzeichnet, daß die Anschlagstellungen (41, 42) so positioniert sind, daß in jeder Anschlagstellung (41, 42) eines der Werkzeuge (36A, 36B) des Werkzeugträgers (38) in derselben Schnittebene (46) steht.

**49.** Vorrichtung nach einem der Ansprüche 45 bis 48, dadurch gekennzeichnet, daß eines der Werkzeuge (36A) zur Vorbearbeitung und ein anderes Werkzeug (36B) zur Fertigbearbeitung vorgesehen ist.

**50.** Vorrichtung nach einem der voranstehenden Ansprüche, dadurch gekennzeichnet, daß ein Z'-Schlitten (49) vorhanden ist, der einen Y'-Achsen-Antrieb (50) trägt, mit welchem ein Werkzeugträger mit einem Werkzeug in Y'-Richtung auf das Werkstück zustellbar ist.

**51.** Vorrichtung nach Anspruch 50, dadurch gekennzeichnet, daß das Werkzeug zur Einarbeitung von Ringnuten in das Werkstück vorgesehen ist.

Fig. 1

Fig. 2

# Fig. 3

Fig. 4

Fig. 5

EP 0 479 025 A2

# Fig. 6

Fig. 7

# Fig. 8

118

$i_U$  $i_V$  $i_W$

$\sim R$
$\sim S$
$\sim T$

198

$S_U$  $S_V$  $S_W$

30  $I_Z$

56  $I_X$

54  $I_C$

197

199

Fig. 9

Fig. 10

EP 0 479 025 A2

Fig. 11

# Fig. 12

EP 0 479 025 A2

# Fig. 13

Fig. 14

12'  28'  10'

26'

234

230

22'

35'

40'

240

236

238

16'

Fig. 15

14'

35'  40'  134  116

36B'

13

46'

46'

46'

36A'

136